Europäisches Patentamt

(19) European Patent Office

Office européen des brevets

(11) Publication number : **0 393 827 B1**

# EUROPEAN PATENT SPECIFICATION

(45) Date of publication of patent specification :
26.05.93 Bulletin 93/21

(51) Int. Cl.⁵ : **B29C 67/22, // (B29K75/00, B29L31:58)**

(21) Application number : 90302512.0

(22) Date of filing : 08.03.90

(54) Process for preparing multihardness foam articles.

(30) Priority : 18.03.89 GB 8906297

(43) Date of publication of application :
24.10.90 Bulletin 90/43

(45) Publication of the grant of the patent :
26.05.93 Bulletin 93/21

(84) Designated Contracting States :
AT BE DE ES FR GB IT LU NL SE

(56) References cited :
EP-A- 0 251 959
EP-A- 0 267 490
DE-A- 3 739 249
GB-A- 2 182 604
US-A- 4 073 839

(73) Proprietor : POLYOL INTERNATIONAL B.V.
Aert van Nesstraat 45, Postbus 1310
NL-3012 CA Rotterdam (NL)

(72) Inventor : Brown, Michael John
31 Chemin des Semailles
CH-1212 Grand Lancy, Geneva (CH)
Inventor : Lidy, Werner August
Jan Van Galenstraat 20
NL-4535 BX Terneuzen (CH)

(74) Representative : Raynor, John et al
W.H. Beck, Greener & Co 7 Stone Buildings
Lincoln's Inn
London WC2A 3SZ (GB)

## Description

The present invention relates to the preparation of multihardness foam articles by the pouring of differing foam formulations into a mould.

It is known to prepare multihardness foam articles, employing for example polyurethane foam, by a variety of methods. In the case of vehicle seats, for example, much research activity has been spent in developing multilayer or multihardness polyurethane foam seats which, whilst being of low weight, have adequate comfort and support characteristics.

One approach to manufacturing multilayer or multihardness foam seating is described in EP 0251659. This patent describes a process which involves pouring sequentially two or more foam formulations, designed to produce two or more foam formulations of differing hardness, onto a given point in the bottom of a seat mould and thereafter allowing them to rise and cure. The seat mould is inclined slightly to the horizontal (preferably 5-12 degrees) and the point of pouring is located at or near the top of the inclined bottom surface of the mould. It is a feature of the process described that the formulations are poured sequentially without any waiting time between, hence in general little or no foaming of any of the formulations takes place on the time scale on which pouring occurs. Although, according to the patentee, it would be expected that under such conditions, the formulations would mix, this does not however occur and, after curing, a foam seat comprising discrete layer of the various foams is produced. The discrete layers are found to be bonded to one another.

EP 0251659 exemplifies processes in which the various foam formulations, which may, for example, be hard and soft foam formulations, originate from the same outlet on the mixing head producing the formulations. The natural flow of each foam formulation down the inclined surface of the bottom of the mould is then relied upon to fill the mould evenly. This leads to a problem when such a process is applied to large moulds, e.g. those used to produce the single seating area which most manufacturers require for the rear of automobiles. In such situations, it is not only difficult to obtain uniform coverage of the bottom of the mould, but it is necessary that the formulations have relatively long cream times to ensure that coverage is completed whilst the formulation(s) are still in an essentially liquid state.

It has now been found that this problem can be overcome by certain modifications to the procedure by which the foam formulations are introduced into the mould. In particular, it has been found that the problem can be overcome by using two or more mixing head provided with two or more outlets arranged in a line and by pouring simultaneously from both or more outlets whilst moving the mixing head across the mould along the line defined by the line of the outlets. In addition, it has been found that less of an incline is necessary relative to EP 0251569 and indeed no mould inclination can be used.

According to the present invention, there is therefore provided a process for preparing a multihardness or multidensity foamed article in a mould arranged so that the bottom surface of the mould is flat or inclined up to 40 degrees to the horizontal said processes comprising the following steps:

(a) arranging a dispensing means, comprising at least two outlets for dispensing at least two foam formulations, the outlets being arranged in a line, and the distance between adjacent outlets being less than the width of the mould, so that the outlets move across the mould either at or near one of the edges of the flat bottom surface or at or near the top of the incline of the inclined bottom surface along the line defined by the outlets;

(b) effecting relative motion of the outlets (with respect to the mould) across the mould along the line defined by the outlets; and

(c) dispensing from each outlet simultaneously a foam formulation whilst the outlet is directly above the inside of the mould so that each outlet dispenses its foam formulation over an elongate path extending across the mould in the direction of the motion of the outlets.

The present invention solves the problem by dispensing the foam formulations in a strip across the mould thereby allowing a faster and more even covering of the mould. It also allows subsequent foam formulations to be dispensed whilst one or more previous foam formulations are still being dispensed thereby further reducing dispensing time.

It is a preferred feature of the process of the present invention that the dispensing means has at least two independent outlets and that these outlets move across the mould more-or-less parallel to the edge of the mould nearest to the top of the incline. The dispensing means is suitably the movable arm of a robot onto which are mounted outlets which are themselves each connected to a mixing head in which the components of the foam formulation are mixed. The outlets and mixing heads are also preferably computer controlled so that the dispensing of each foam formulation can be matched to the movement characteristics of the robot arm.

It will be appreciated that a-similar effect can be obtained using fixed outlets and moving the mould relative to the outlets.

As mentioned above, the outlets are arranged so that they define a straight line and the distance between adjacent outlets is less than the width of the mould in the direction of movement of the dispensing means. Preferably the distance between adjacent outlets is small in order to reduce the total time required to dispense the formulations although it will be appreciated that the optimum conditions are a function of both the distance separating adjacent outlets and the speed at which movement across the mould takes place. Employing the robots currently available, it has been found convenient to use a separation of outlets comprising about 20% of the width of the mould. More specifically, a separation between adjacent outlets of between 5 and 50, preferably 10 to 30 cm has been found very suitable. In practice, it is desirable to avoid separation of less than 5 cm as there is a risk that mixing of the foam formulations could occur as they are being dispensed. For most situations encountered a separation of 10 to 20 cm has proven to be most useful.

The number of outlets employed will depend upon the exact form of multihardness article required. For example, if an article containing a number of thin layers (e.g. 3-6) is required, then the appropriate number of outlets can be used. The dispensing means can be arranged so that each outlet receives a different foam formulation or so that adjacent outlets dispense different foam formulations. The second approach is useful where it is desirable to build up a multilayer article comprising alternating layers of say two foams of differing hardness.

The process of the present invention is preferably operated so that the bottom surface of the mould be inclined from between 0.1 to 40 degrees to the horizontal. This may be achieved by actually tilting the mould or by employing a mould which has been manufactured with an inclined bottom surface. In fact, for most conventional automobile seat moulds, the incline in the mould running from the front to the back of the seat is sufficient for the purposes of this invention. Preferably, the angle of incline is 4 to 20 degrees, most preferably 5 to 12 in agreement with the teaching of EP 0251659.

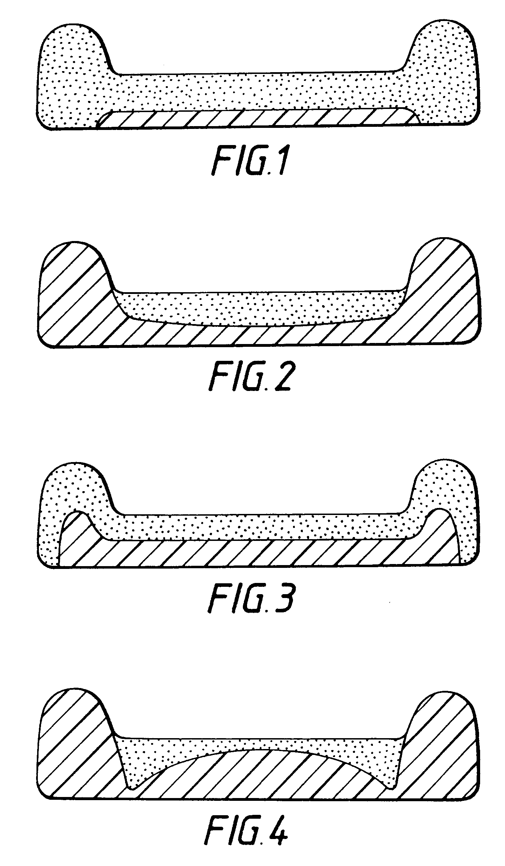

The process of the present invention is particularly applicable to automobile seat moulds, for making seats which comprise a central seating area arranged between two supporting side rolls. By employing this technique with a two outlet dispensing means, to the side rolls of the mould, it has been found that good encapsulation of the second dispensed foam in the first dispensed foam can be achieved. This encapsulation, as opposed to the layered configuration normally encountered in moulds having a bottom of the type shown in Figure 1 of EP 0251659, is believed to arise as a consequence of the curved nature of the bottom surface of the side roll. In any event, the result is that it is possible to produce automobile seats comprising a layered foam seating area and encapsulated side rolls using a single continuous pouring operation.

The technique can also be used to prepare single hardness side rolls.

The foam formulations to be used in,the present invention are suitably polyurethane foam formulations, although it is envisaged that the technique could be applicable to other polymer foam systems. Polyurethane foams are well known in the art and comprise the product obtained by mixing a polyfunctional isocyanate with a polyfunctional active hydrogen containing compound (e.g. a polyether polyol) in the presence of a blowing agent. In the process of the present invention, such mixtures are generated in the mixing head and then poured into the mould through the outlet before the mixture has started to rise, i.e. whilst the foam formulation is still in an essentially liquid state.

The process of the present invention can be used with any type of polyurethane foam formulation including 'hot-cure' and 'cold-cure' formulations.

The preferred polyurethane foam formulations to be used in the present invention however are those producing flexible foam, most preferably flexible HR (high resilience) foams. In such a case, two streams are fed to the mixing head; one comprising a formulated polyol, i.e. some or all of polyols, polymer polyols, blowing agent, catalysts, silicone surfactants, blowing agents and other additives; the other comprising the polyisocyanate.

Examples of preferred polyols are those in which 40 weight percent of the total polyol content is constituted of a polyether triol having the following additional characteristics:

(a) an average primary hydroxyl content of at least 40 mole percent (or no more than 60 mole percent of the less reactive secondary hydroxyl groups); and

(b) an average molecular weight of from about 2000 to about 12000.

Preferably, such polyether triols for use as components of flexible foam formulations contain from about 60 to about 90 mole percent of primary hydroxyl groups and have an average molecular weight of from about 4000 to 7000.

Consistent with their trifunctionality and the aforesaid respective ranges of molecular weights, such polyether triols have hydroxyl numbers from 84 to 21, preferably from 42 to 24. These highly reactive polyether triols are provided by oxyalkylation of a trifunctional alcohol starter such as glycerol and the like, with propylene oxide and ethylene oxide. Usually, the total ethylene oxide content of the polyether triol is between about 7 and about 20 weight percent, expressed on the basis of total alkylene oxide feed during the oxyalkylation reaction. The high primary hydroxyl content is introduced by capping of the polyoxyalkylene chains with at least a portion of the total ethylene oxide feed.

If the flexible foam is to be a high resilience flexible foam, polyether triols may be employed in combination with other polyols to control the degree of softness or firmness of the foam and to vary the load bearing properties.

In particular, the formulated polyol may contain polymer polyols which in turn contain finely dispersed or grafted organic or inorganic material to provide improved load bearing properties. Examples of such polymer polyols are graft polymer polyols prepared by polymerising ethylenically unsaturated monomers e.g. acrylonitrile and/or styrene in a polyether polyol or the so called PHD or PIPA dispersion polymer polyols. The polyether polyol in which the polymerisation takes place preferably has the characteristics indicated above.

Other conventional blowing agents can be used in place of water.

The catalysts used are known per se, e.g. tertiary amines such as triethylamine, tributylamine, N-methyl-morpholine, N-ethyl-morpholine, N,N,N',N'-tetramethyl-ethylene-diamine, 1,4-diaza-bicyclo-(2,2,2)octane, N-methyl-N'-dimethyl-amino-ethylpiperazine, N,N-dimethyl benzylamine, bis-(N,N-diethylamino-ethyl)adipate, N,N-diethylbenzylamine, pentamethyl diethylene-triamine, N,N-dimethylcyclohexylamine, N,N,N',N'-dimethyl-phenyl-ethylamine, 1.2-dimethyl imidazole and 2-methyl-imidazole, triethylene diamine, bis(2-dimethylamino ethyl) ether.

Tertiary amines which contain hydrogen atoms capable of reacting with isocyanate groups may also be employed, e.g. triethanolamine, triisopropanolamine, N-methyldiethanolamine, N-ethyldiethanolamine, N,N-dimethylethanolamine or their reaction products with alkylene oxides such as propylene oxide and/or ethylene oxide.

Organic metal compounds may also be used as catalysts according to the invention, especially organic tin compounds. The organic tin compounds used are preferably tin (II) salts of carboxylic acids such as tin (II)-acetate, tin (II) octoate, tin (II)-ethylhexonoate and tin (II)-laurate and the dialkyl tin salts of carboxylic acids such as dibutyl tin diacetate, dibutyl tin dilaurate, dibutyl tin maleate or dioctyl tin diacetate.

The catalysts are generally used in a quantity of between 0.002 and 10% by weight, based on the total quantity of polyol.

In producing flexible polyurethane foam in accordance with the method of this invention, a minor amount of an organosilicone surfactant may also be present as an additional component of the polyurethaneforming reaction mixture. When used, such surfactants are usually present in amounts up to about 5 parts by weight per 100 parts by weight of total polyol reactant. Suitable classes of silicone surfactants are poly(dimethylsiloxane) oils and the polysiloxane-polyoxyalkylene block copolymers wherein the respective blocks are joined through silicon-to-carbon or silicon-to -oxygen-to-carbon bonds and the respective polyoxyalkylene blocks are bonded to different silicon atoms of the polysiloxane backbone to form a comb-like structure. Usually, the polysiloxane blocks are trialkylsiloxy end blocked. In addition to the siloxy units to which the pendant polyoxyalkylene chains are bonded, the polysiloxane backbone is formed of difunctional siloxy units wherein the respective two remaining valences of silicon are satisfied by bonds to organic radicals. Illustrative of such organic radicals are the hydrocarbyl groups having from 1 to 12 carbon atoms including alkyl, aryl, aralkyl, bicycloheptyl and halogen substituted derivatives of such groups. The polyoxyalkylene blocks are usually constituted of oxyethylene units, oxypropylene units or a combination of such units, and the polyoxyalkylene chains are hydroxyl-terminated or capped with a monovalent organic group such as alkyl, aryl, aralkyl, acyl, carbamyl and the like.

The organosilicone component is preferably present in formulations in an amount between about 0.025 and about 2 parts by weight per 100 parts by weight of total polyol.

Generally, the blowing agent is employed in an amount from about 1 to about 15 parts by weight per 100 parts by weight of polyol, the particular blowing agent and amount thereof depending upon the type of foam product desired. Flexible foam formulations usually contain no more than about 6 pphp of water. The selection and amount of blowing agent in any particular foam formulation is well within the skill of those skilled in the polyurethane foam art. Suitable organic blowing agents are halogenated alkanes, such as methylene chloride, chloroform, ethylidene chloride, vinylidene chloride, monofluorotrichloromethane, chlorofluoromethane or dichlorodifluoromethane, carbon dioxide or other inert gases. A blowing effect can also be obtained by adding compounds which decompose at temperatures above room temperature to liberate gases, e.g. azo compounds such as azoisobutyric acid nitrile which liberate nitrogen.

Other ingredients may also be included optionally. They include chain extenders, crosslinkers, colouring agents, fillers, flame retardants and the like.

Chain extenders are difunctional compounds containing active hydrogen (i.e. hydrogen which will react with isocyanate groups under the conditions used in foaming). Examples of suitable compounds containing active hydrogen are compounds containing hydroxyl or amines groups. Cross-linkers are compounds containing more than 2 active hydrogen atoms per molecule, preferably more than 3. Examples of such cross-linkers are diethanolamine, triethanolamine, N,N,N'N'-tetrakis-(2-hydroxypropyl) ethylene diamine, and phenol/formaldehyde/aniline condensation products. The active hydrogen content of the cross-linker or chain extender is preferably relatively high so as to allow a significant effect on hardness to be obtained without requiring an excessive amount of additive. The active hydrogen content may for example correspond to a hydroxyl number as low as 50, particularly when a chain extender is used. The cross-linker or chain extender preferably has an active hydrogen content corresponding to a hydroxyl number of at least 100, more preferably 600 to 1500. Where the cross linker or chain extender is fed as an additive to one of the main reaction streams it is preferably used at the rate of 2 to 10 parts by weight per 100 parts of polyol.

It is also sometimes desirable to include various additives in the reaction mixture such as colouring agents, fillers, flame retardants and the like.

Suitable colouring agents are, for example carbon black, titanium dioxide, methyl blue, chromium red and the like.

Suitable fillers are vermiculite, saw dust, synthetic plastics including vinyl polymers such as, polyvinyl chloride, polystyrene and the like.

Suitable flame retardants are antimony oxide, tris (chloroethyl) phosphate, tricresyl phosphate, triphenyl phosphate, melamine and the like.

The isocyanate component employed in this invention for mixing with active hydrogen compounds are those having the general formula:

$$Q(NCO)_i$$

wherein i is an integer of two or more and Q is an organic radical having the valence of i. Q can be a substituted or unsubstituted hydrocarbon group (e.g. an alkylene or an arylene group). Examples of such compounds include hexamethylene diisocyanates, phenylene diisocyanates and tolyene diisocyanates. Q can also represent a polyurethane radical having a valence or i in which case $Q(NCO)i$ is a composition conventionally known as a pre-polymer. Such pre-polymers are formed by reacting a stoichiometric excess of a polyisocyanate with an active hydrogen-containing component, especially polyhydroxyl containing materials or polyols. More specifically, the polyisocyanate component employed in this invention also includes the following specific compounds as well as a mixture of two or more of them, 2,4-tolylene diisocyanate, 2,6-tolylene diisocyanate, crude tolylene diisocyanate, bis(4-isocyanatophenyl) methane, polyphenylmethylene polyisocyanates that are produced by phosgenation of aniline formaldehyde condensation products.

The polyurethane foam formulations used in the process of the present invention are preferably chosen such that they differ in hardness from each other. It is further preferred that such formulations differ in hardness by virtue of their content of one or more of the following: 1. polymer polyols, 2. isocyanate with a functionality greater than two, i.e. with more than two isocyanate groups per molecule, e.g. the content of polyphenylmethylene polyisocyanate in bis(4-isocyanatophenyl )methane. Active hydrogen containing compound which may be chain extender or cross-linker. In the case of the automobile seat with side rolls described above, it is preferable, where two foam formulations are used, that the foam formulation added first yields a softer foam than that added second.

The invention defined above will now be illustrated with reference to the following Examples.

Example 1

An automotive seat mould comprising a central seating zone and side rolls was employed. The mould was arranged so that the bottom surface had an incline of 1 degree to the horizontal. Two outlets were connected to respectively a Krauss Maffei Rimstar 40/10 machine and a Krauss Maffei KK 10-5/5 machine. With this arrangement the outlets were employed to dispense respectively the soft and hard foam formulations. The actual compositions of the formulations are given in Table 1. The two outlets were mounted on an Asea Robart arm separated by a distance of 12 cm.

The pouring procedure was as follows: The outlet dispensing the soft foam formulation was located at the top of the inclined surface near the left hand edge of the mould (i.e. above the left hand side roll). With this arrangement, the outer outlet was located above a point outside the mould. Pouring of the soft foam was started and at the same time the robot started to move the outlets across the mould parallel to the top of the inclined surface. As soon as the hard foam outlet had cleared the left hand side roll, hard foam formulation was dispensed. As soon as the hard foam outlet reached the right hand side roll nothing further was dispensed therefrom. Whilst both outlets were moving across the central seating zone, both outlets were dispensing. As soon as the soft foam outlet cleared the right hand side roll no further material was dispensed. With this procedure the soft foam formulation was poured for 3 seconds and the hard for 2 seconds. The width of the mould was 50 cm. The rate of dispensing was 305gsec-1 for the soft and 140gsec-1 for the hard. After pouring the mould was closed and the contents allowed to rise and cure. The resulting cushion which was demoulded from the mould had a cross-section as shown in Figure 1.

Example 2

The hardware and formulations used were as described in Example 1. The pouring procedure was as follows: In this case the hard foam formulation outlet was located at the top of the inclined surface near the edge of the mould and the soft foam formulation outlet at the left hand side of the central seating zone. Movement of the outlets as described in Example 1 was carried out with simultaneous and immediate pouring from both outlets. Pouring from the soft foam formulation outlet stopped when that outlet had reached the right hand side of the central seating zone. Pouring from the other outlet was stopped when it had reached the right hand edge of the mould. The resulting demoulded cushion had a cross-section as shown in Figure 2.

Example 3

The hardware and formulations employed were as described in Example 1. The pouring procedure was as described in Example 1 except that pouring from the hard foam formulation outlet was started as soon as it cleared the left hand edge of the mould. Furthermore, pouring from this outlet was not stopped until the right hand edge of the mould was reached. The resulting demoulded cushion had a cross section as shown in Figure 3.

Comparative Test A

This test used the procedure described in EP 251659 and formulations of mould described in Example 1.
A single outlet was located above the top of the inclined surface at the centre of the central seating zone. The soft foam formulation was poured from the outlet for 3 seconds. Immediately after the hard foam formulations were poured at the same point for 1 second. Subsequently, the hard foam formulation was poured into each of the side rolls (0.5 seconds in each). The resulting demoulded cushion had a cross section as shown in Figure 4.
Comparison of Figure 4 with Figures 1 to 3 show the additional advantage that, using the process of the present invention, a preferred flat boundary between the hard and soft foams in the seating area is obtained.

## TABLE 1

| Hard Foam Formulation - Component A | |
|---|---|
| | pbw |
| RP 1490 (Polyol ex BP Chemicals Limited) | 59 |
| C 1735 (Polyol ex BP Chemicals Limited) | 46 |
| Water | 3 |
| Al (catalyst ex UCC) | 0.15 |
| Dabco 33LV (catalyst) | 0.7 |
| RS 171 (silicone surfactant ex BP Chemicals) used in an appropriate amount as known in the art | |

| Soft Foam Formulation - Component A | |
|---|---|
| | pbw |
| U1315 (Polyol ex BP Chemicals Limited) | 100 |
| Water | 3.0 |
| Al | 0.1 |
| Dabco 33 LV | 0.6 |
| SH209 (silicone surfactant ex BP Chemicals) | 0.7 |

| Component B | |
|---|---|
| | pbw |
| I1317 (Index 100) | 38.6 |

| Conditions for Each Mixing Head |
|---|
| Polyol Termperature = 28°C |
| Isocyanate temperature = 25°C |
| Polyol dispensing presssure = 160 bar (hard) |
| 180 bar (soft) |
| Isocyanate dispensing pressure = 160 bar (hard) |
| 180 bar (soft) |
| Ratio A:B 2.8 approx. (hard) |
| Ratio A:B 2.7 approx. (soft) |

## Claims

1.   A process for preparing a multihardness foam article in a mould arranged so that the bottom surface of the mould is flat or inclined up to 40 degrees to the horizontal plane said process comprising the following steps:

a) arranging a dispensing means comprising at least two outlets for dispensing at least two foam formulations, the outlets being arranged in a line, and the distance between adjacent outlets being less than the width of the mould, so that the outlets move across the mould either at or near one of the edges of the flat bottom surface or at or near the top of the incline of the inclined bottom surface along the line defined by the outlets;

b) effecting relative motion of the outlets (with respect to the mould) across the mould along the line defined in the outlets; and

c) dispensing from each outlet simultaneously a foam formulation whilst the outlet is directly above the inside of the mould so that each outlet dispenses its foam formulation over an elongate path extending across the mould in the direction of the motion of the outlets.

2. The process according to Claim 1 wherein the distance between adjacent outlets is 20% of the width of the mould.

3. The process according to Claim 1 wherein the distance between adjacent outlets is between 5 and 50 cm.

4. The process according to Claim 1 wherein the distance between adjacent outlets is between 10 and 30 cm.

5. The process according to any one of Claims 1-4 wherein each of the outlets dispenses different foam formulations.

6. The process according to any one of Claims 1-4 wherein the adjacent outlets dispense different foam formulations.

7. The process according to any one of Claims 1-6 wherein the foam formulations are polyurethane foam formulations.

8. The process according to Claim 7 wherein the polyurethane foam formulations are those producing flexible foam.

9. The process according to any one of Claims 1-8 wherein a car seat comprising a layered foam seating area and single hardness foam side rolls is produced in a single continous pouring operation.

10. The process according to any one of Claims 1-8 wherein a car seat comprising a layered foam seating area and encapsulated foam side rolls is produced in a single continous pouring operation

**Patentansprüche**

1. Verfahren zur Herstellung eines Schaumartikels mit unterschiedlichen Härten in einer Form, die so angeordnet ist, daß die Bodenfläche der Form flach oder bis zu 40 Grad zur horizontalen Ebene geneigt ist, wobei das Verfahren die folgenden Schritte umfaßt:

a) Anordnen eines Abgabemittels, das mindestens zwei Ausgänge zur Abgabe von mindestens zwei Schaumformulierungen umfaßt, wobei die Ausgänge in einer Linie angeordnet sind und die Entfernung zwischen benachbarten Ausgängen geringer als die Breite der Form ist, so daß sich die Ausgänge entweder an oder nahe einem der Ränder der flachen Bodenfläche oder an oder nahe dem oberen Ende der Neigung der geneigten Bodenfläche entlang der durch die Ausgänge definierten Linie über die Form bewegen,

b) Bewirken einer relativen Bewegung der Ausgänge (bezüglich der Form) entlang der in den Ausgängen definierten Linie über die Form und

c) gleichzeitiges Abgeben einer Schaumformulierung aus jedem Ausgang, während der Ausgang direkt über dem Inneren der Form ist, so daß jeder Ausgang seine Schaumformulierung entlang eines langgestreckten Weg abgibt, der sich in Richtung der Bewegung der Ausgänge über die Form erstreckt.

2. Verfahren nach Anspruch 1, worin die Entfernung zwischen benachbarten Ausgängen 20 % der Breite der Form ist.

3. Verfahren nach Anspruch 1, worin die Entfernung zwischen benachbarten Ausgängen zwischen 5 und 50 cm ist.

4. Verfahren nach Anspruch 1, worin die Entfernung zwischen benachbarten Ausgängen zwischen 10 und 30 cm ist.

5. Verfahren nach einem der Ansprüche 1 bis 4, worin jeder der Ausgänge unterschiedliche Schaumformulierungen abgibt.

6. Verfahren nach einem der Ansprüche 1 bis 4, worin die benachbarten Ausgänge unterschiedliche Schaumformulierungen abgeben.

7. Verfahren nach einem der Ansprüche 1 bis 6, worin die Schaumformulierungen Polyurethanschaumformulierungen sind.

8. Verfahren nach Anspruch 7, worin die Polyurethanschaumformulierungen solche sind, die einen flexiblen Schaum erzeugen.

9. Verfahren nach einem der Ansprüche 1 bis 8, worin ein Autositz, der einen Sitzbereich mit in Schichten angeordnetem Schaum und Seitenwülste mit einem Schaum einer einzigen Härte enthält, in einem einzigen kontinuierlichen Gießvorgang erzeugt wird.

10. Verfahren nach einem der Ansprüche 1 bis 8, worin ein Autositz, der einen Sitzbereich mit in Schichten angeordnetem Schaum und verkapselte Schaumseitenwülste enthält, in einem einzigen kontinuierlichen Gießvorgang erzeugt wird.

## Revendications

1. Procédé de préparation d'un article en mousse multidureté, dans un moule disposé de telle manière que la surface du fond du moule soit horizontale ou inclinée de jusqu'à 40° par rapport au plan horizontal, ledit procédé comprenant les étapes consistant à :
   a) disposer un moyen de distriburion comprenant au moins deux sorties pour la distribution d'au moins deux compositions pour mousse, les sorties étant disposées suivant une ligne et la distance entre des sorties voisines étant inférieure à la largeur du moule, de telle manière que les sorties se déplacent à travers le moule, soit à ou près de l'un des bords de la surface de fond horizontale, soit au ou près du sommet de la pente de la surface de fond inclinée, le long de la ligne définie par les sorties,
   b) faire effectuer aux sorties un mouvement relatif (par rapport au moult) à travers le moule, le long de la ligne définie par les sorties, et
   c) distribuer par chaque sortie simultanément une composition pour mousse, pendant ,que la sortie est directement au-dessus de l'intérieur du moule, de telle sorte que chaque sortie distribue sa composition pour mousse, sur un chemin allongé s'étendant à travers le moule dans la direction du déplacement des sorties.

2. Procédé selon la revendication 1, dans lequel la distance entre des sorties voisines est égale à 20% de la largeur du moule.

3. Procédé selon la revendication 1, dans lequel la distance entre des sorties voisines est comprise entre 5 et 50 cm.

4. Procédé selon la revendication 1, dans lequel la distance entre des sorties voisines est comprise entre 10 et 30 cm.

5. Procédé selon l'une quelconque des revendications 1 à 4, dans lequel chacune des sorties distribue une composition pour mousse différente.

6. Procédé selon l'une quelconque des revendications 1 à 4, dans lequel les sorties voisines distribuent des compositions pour mousse différentes.

7. Procédé selon l'une quelconque des revendications 1 à 6, dans lequel les compositions pour mousse sont des compositions pour mousse de polyuréthane.

8.  Procédé selon la revendication 7, dans lequel les compositions pour mousse de polyuréthane sont des compositions produisant une mousse souple.

9.  Procédé selon l'une quelconque des revendications 1 à 8, dans lequel un siège de véhicule, comprenant une surface où l'on s'assoit constituée de mousse stratifiée et des rouleaux latéraux en mousse à dureté unique, est produit en une seule opération continue de versement.

10. Procédé selon l'une quelconque des revendications 1 à 8, dans lequel un siège de véhicule, comprenant une surface où l'on s'assoit constituée de mousse stratifiée et des rouleaux latéraux en mousse enrobée, est produit en une seule opération continue de versement.

FIG.1

FIG.2

FIG.3

FIG.4